(19) Europäisches Patentamt
European Patent Office
Office européen des brevets

(11) **EP 1 861 972 B1**

(12) **EUROPEAN PATENT SPECIFICATION**

(45) Date of publication and mention
of the grant of the patent:
**22.04.2009 Bulletin 2009/17**

(21) Application number: **06736533.8**

(22) Date of filing: **01.03.2006**

(51) Int Cl.:
*H04L 25/02* (2006.01)

(86) International application number:
**PCT/US2006/007227**

(87) International publication number:
**WO 2006/094037 (08.09.2006 Gazette 2006/36)**

(54) **Channel estimation optimization**

Kanalschätzungsoptimierung

Optimisation de l'estimation de canal

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **01.03.2005 US 657835 P**

(43) Date of publication of application:
**05.12.2007 Bulletin 2007/49**

(60) Divisional application:
**08004275.7 / 1 928 136**

(73) Proprietor: **QUALCOMM INCORPORATED
San Diego, California 92121 (US)**

(72) Inventors:
• **MUKKAVILLI, Kiran
San Diego, California 92121-1714 (US)**
• **COUSINEAU, Kevin S.
Ramona, California 92065 (US)**
• **CHUNG, Taek
Redwood City, California 94065 (US)**

(74) Representative: **Heselberger, Johannes
Patent- und Rechtsanwälte
Bardehle - Pagenberg - Dost
Altenburg - Geissler
Galileiplatz 1
81679 München (DE)**

(56) References cited:
**WO-A-03/034644          WO-A-20/04040813**

• **YUPING ZHAO ET AL: "A novel channel
estimation method for OFDM mobile
communication systems based on pilot signals
and transform-domain processing" VEHICULAR
TECHNOLOGY CONFERENCE, 1997, IEEE 47TH
PHOENIX, AZ, USA 4-7 MAY 1997, NEW YORK,
NY, USA, IEEE, US, vol. 3, 4 May 1997 (1997-05-04),
pages 2089-2093, XP010229166 ISBN:
0-7803-3659-3**

**Description**

**BACKGROUND**

**I. Field**

The present invention relates generally to data communication, and more specifically to techniques for optimizing channel estimation in an orthogonal frequency division multiplexing (OFDM) communication system supporting multiple modes of communication.

**II. Background**

OFDM is a multi-carrier modulation technique that effectively partitions the overall system bandwidth into multiple (N) orthogonal subbands. These subbands may also be referred to as tones, subcarriers, bins, and frequency channels. With OFDM, each subband is associated with a respective subcarrier that may be modulated with data.

In a wireless communication system, a radio frequency (RF) modulated signal may travel via a number of signal paths from a transmitter to a receiver. If the signal paths have different delays, then the received signal at the receiver would include multiple instances of the transmitted signal with different gains and delays. This time dispersion in the wireless channel causes frequency selective fading, which is characterized by a frequency response that varies across the system bandwidth. For an OFDM system, the N subbands may thus experience different effective channels and may consequently be associated with different complex channel gains.

An accurate estimate of the wireless channel between the transmitter and the receiver is normally needed in order to effectively receive data on the available subbands. Channel estimation is typically performed by sending a pilot from the transmitter and measuring the pilot at the receiver. A pilot is made up of modulation symbols that are known *a priori* by the receiver. The receiver can estimate the channel response as the ratio of the received pilot symbol over the transmitted pilot symbol, and can determine the ratio for each subband used for pilot transmission. Such a system is described in Yuping Zhao et al "A novel channel estimation method for OFDM mobile communication systems based on pilot signals and transform-domain processing" in VEHICULAR TECHNOLOGY CONFERENCE 1997, pages 2089 to 2093.

Pilot transmission represents overhead in the OFDM system. Thus, it is desirable to minimize pilot transmission to the extent possible. This can be achieved by sending pilot symbols on a subset of the N total subbands and using these pilot symbols to derive channel estimates for all subbands of interest. As described below, the computation to derive the channel estimates can be great for certain systems such as, for example, (1) a spectrally shaped system that does not transmit data/pilot near the band edges and (2) a system that cannot transmit data/pilot on certain subbands (e.g., zero or DC subband). There is therefore a need in the art for techniques to efficiently estimate the channel response for these systems.

**SUMMARY**

This need is fulfilled by a method according to independent claim 1. Techniques to efficiently derive at least one frequency response estimate for a multiple-access wireless channel in an OFDM system with inactive subbands are described herein. These techniques may be used for an OFDM system that transmits pilot on subbands that are not uniformly distributed across N total subbands. An example of such a system is a spectrally shaped OFDM system in which only M subbands, which are centered among the N total subbands, are used for data/pilot transmission and the remaining N - M subbands at the two band edges are not used and served as guard subbands. The inactive subbands may thus be the guard subbands, DC subband, and so on.

For the channel estimation, an initial frequency response estimate is obtained for a first set of P uniformly spaced subbands based on, for example, pilot symbols received on a second set of subbands used for pilot transmission, where P is an integer that is a power of two. The first set includes at least one subband not included in the second set (e.g., pilot subbands among the guard subbands). Moreover, the subbands in the first set are uniformly spaced apart by N / P subbands. Extrapolation and/or interpolation may be used, as necessary, to obtain the initial frequency response estimate.

A time-domain channel impulse response estimate for the wireless channel is then derived based on the initial frequency response estimate, for example, by performing a P-point inverse fast Fourier transform (IFFT). For each mode within each OFDM symbol, a final frequency response estimate for the N total subbands is then derived based on the channel impulse response estimate. This may be achieved, for example, by (1) setting low quality taps in the channel impulse response estimate to zero and retaining the remaining taps, (2) zero-padding the channel impulse response estimate to length N, (3) setting to zero taps in the channel impulse response representing a time delay greater than a predetermined delay spread, and (3) performing an N-point fast Fourier transform (FFT) on the processed channel impulse response estimate to obtain the final frequency response estimate.

The thresholding and truncation of the channel impulse response can be varied depending on a mode of the data subbands for which the channel estimate is generated. Thus, the same channel impulse response can generate different final frequency response estimates that vary based on the mode of the data subbands. The channel impulse response estimates or frequency response estimates for multiple OFDM symbols may be filtered for each mode to obtain a higher quality channel estimate for the wireless channel.

Various aspects and embodiments of the invention are described in further detail below.

## BRIEF DESCRIPTION OF THE DRAWINGS

The features, nature, and advantages of the present invention will become more apparent from the detailed description set forth below when taken in conjunction with the drawings in which like reference characters identify correspondingly throughout and wherein:

FIG. 1 shows an exemplary subband structure for an OFDM system;

FIG. 2 shows a pilot transmission scheme that may be used to obtain a frequency response estimate of a wireless channel;

FIG. 3 shows a uniform pilot transmission scheme that can simplify the computation for a least square channel impulse response estimate;

FIG. 4 shows a uniform pilot transmission scheme for a spectrally shaped OFDM system;

FIGS. 5 and 6 show processes for obtaining a frequency response estimate for each mode within each OFDM symbol of the wireless channel in a spectrally shaped OFDM system; and

FIG. 7 shows a simplified functional block diagram of an access point and a terminal in the OFDM system.

FIG. 8 is a simplified functional block diagram of an embodiment of an OFDM receiver having optimized channel estimate processing.

FIG. 9 is a simplified flowchart of a process of optimized channel estimation.

## DETAILED DESCRIPTION

The word "exemplary" is used herein to mean "serving as an example, instance, or illustration." Any embodiment or design described herein as "exemplary" is not necessarily to be construed as preferred or advantageous over other embodiments or designs.

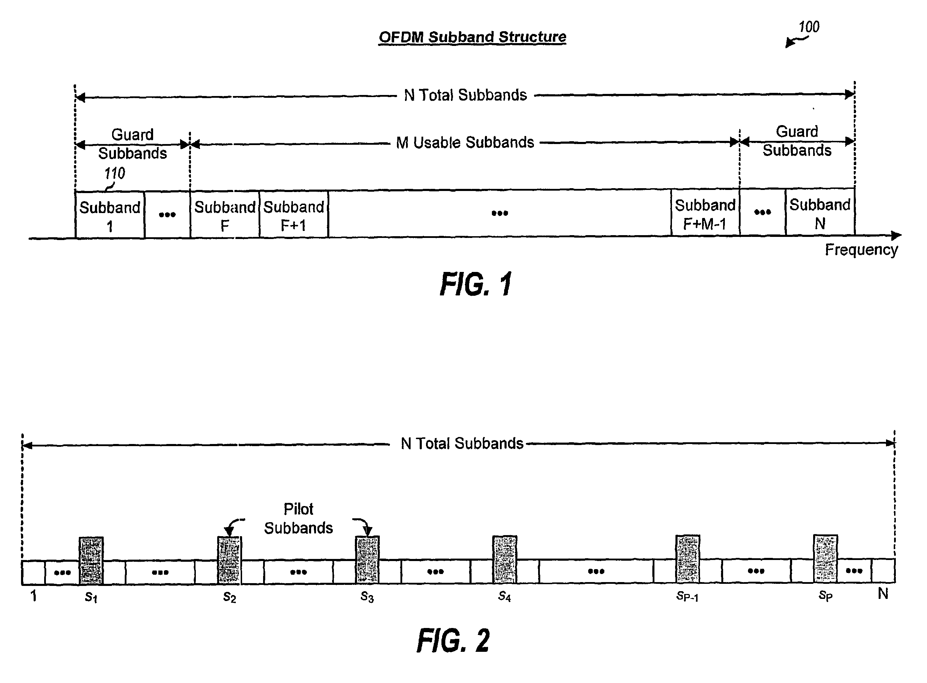

**FIG. 1** shows an exemplary subband structure 100 that may be used for an OFDM system. The OFDM system has an overall system bandwidth of BW MHz, which is partitioned into N orthogonal subbands using OFDM. Each subband has a bandwidth of BW / N MHz. In a spectrally shaped OFDM system, only M of the N total subbands are used for data/pilot transmission, where M < N . The remaining N - M subbands are not used for data/pilot transmission and serve as guard subbands to allow the OFDM system to meet spectral mask requirements. The M usable subbands include subbands F through F + M -1 and are typically centered among the N total subbands.

The N subbands of the OFDM system may experience different channel conditions (e.g., different fading and multipath effects) and may be associated with different complex channel gains. An accurate estimate of the channel response is normally needed to process (e.g., demodulate and decode) data at a receiver.

The wireless channel in the OFDM system may be characterized by either a time-domain channel impulse response $\underline{h}_{N\times 1}$ or a corresponding frequency-domain channel frequency response $\underline{H}_{N\times 1}$. As used herein, and which is consistent with conventional terminology, a "channel impulse response" is a time-domain response of the channel, and a "channel frequency response" is a frequency-domain response of the channel. The channel frequency response $\underline{H}_{N\times 1}$ is the discrete Fourier transform (DFT) of the channel impulse response $\underline{h}_{N\times 1}$. This relationship may be expressed in matrix form, as follows:

$$\underline{H}_{N\times 1} = \underline{W}_{N\times N}\,\underline{h}_{N\times 1} \;,\qquad\qquad \text{Eq (1)}$$

where

$\underline{h}_{N\times 1}$ is an N×1 vector for the impulse response of the wireless channel between a transmitter and a receiver in the OFDM system;

$\underline{H}_{N\times 1}$ is an N×1 vector for the frequency response of the wireless channel; and

$\underline{\mathbf{W}}_{N\times N}$ is an N $\times$ N DFT matrix used to perform the DFT on $\underline{\mathbf{h}}_{N\times 1}$ to obtain $\underline{\mathbf{H}}_{N\times 1}$.

The DFT matrix $\underline{\mathbf{W}}_{N\times N}$ is defined such that the *(n,m)* -th entry $w_{n,m}$ is given as:

$$w_{n,m} = e^{-j2\pi\frac{(n-1)(m-1)}{N}} \quad , \text{ for } n = \{1 \dots N\} \text{ and } m = \{1 \dots N\}, \qquad\qquad \text{Eq (2)}$$

where *n* is a row index and *m* is a column index.

The impulse response of the wireless channel can be characterized by L taps, where L is typically less than the number of total subbands (i.e., L < N). That is, if an impulse is applied to the wireless channel by the transmitter, then L time-domain samples (at the sample rate of BW MHz) would be sufficient to characterize the response of the wireless channel based on this impulse stimulus. The number of taps (L) for the channel impulse response is dependent on the delay spread of the system, which is the time difference between the earliest and latest arriving signal instances of sufficient energy at the receiver. A longer delay spread corresponds to a larger value for L, and vice versa. The vector $\underline{\mathbf{h}}_{N\times 1}$ includes one entry for each tap of the channel impulse response. For a delay spread of L, the first L entries of the vector $\underline{\mathbf{h}}_{N\times 1}$ may contain non-zero values and the N - L remaining entries are all zeros or are otherwise insignificant values.

Because only L taps are needed for an accurate estimate of the channel impulse response, the channel frequency response $\underline{\mathbf{H}}_{N\times 1}$ lies in a subspace of dimension L (instead of N). The frequency response of the wireless channel may thus be fully characterized based on channel gain estimates for as few as L appropriately selected subbands, instead of all N subbands. Even if channel gain estimates for more than L subbands are available, an improved estimate of the frequency response of the wireless channel may be obtained by suppressing the noise components outside this subspace.

In one embodiment, the N-L taps corresponding to the longest delays may be truncated from an N-tap channel impulse response with relatively no degradation of the channel impulse response. The dimension of the channel impulse response can be maintained at N by setting to zero, or some other substantially insignificant value, N-L channel taps. Thus, in the context of channel impulse response, the term truncation refers to the setting an insignificant value the channel taps beyond a predetermined delay spread.

**FIG. 2** shows a pilot transmission scheme 200 that may be used to obtain a frequency response estimate for the wireless channel in the OFDM system. A pilot symbol is transmitted on each of P pilot subbands, where in general $L\leq P\leq M$. The pilot subbands are distributed among the M usable subbands and have indices of $s_t$ through $s_P$. Typically, the number of pilot subbands is much less than the number of usable subbands (i.e., P < M). The remaining M - P usable subbands may be used for transmission of user-specific data, overhead data, and so on.

The M - P subbands can be used to support a communication link with a single user or multiple communication links corresponding to multiple users. Additionally, each of the subbands may be multiplexed to support multiple users or multiple data links. In one embodiment, a subset of the M - P subbands can be allocated to a distinct communication link.

The M - P subbands may be allocated in substantially equal subband sets, with subbands within a subband set operating in the same mode. For example, the M - P subbands can be allocated to any one of Q predetermined subband sets, with each of the Q subband sets having substantially the same number of subbands.

The subbands allocated to a particular subband set from the Q subband set can all operate in the same mode. For example, each of the subcarriers corresponding to the subbands in the subband set can be modulated with the same modulation type, have substantially the same data rate, have data encoded with the same encoder types, encoding rate, layered modulation type, or share some other signaling parameter or combination of parameters.

In one embodiment, each mode can refer to a particular combination of encoder rate and modulation type. For example, each of the subband sets can be configured according to one of eleven distinct modes that includes a particular combination of modulation type, encoder type, and encoding rate. The modes include: Quadrature Phase Shift Keying (QPSK), rate 1/3 turbo code; QPSK, rate ½ turbo code; 16 Quadrature Amplitude Modulation (QAM), rate 1/3 turbo code; 16 QAM , rate ½ turbo code; 16 QAM, rate 2/3 turbo code; QPSK, rate 1/5 turbo code; Layered QPSK, energy ratio 4, rate 1/3 turbo code; Layered QPSK, energy ratio 4, rate 1/2 turbo code; Layered QPSK, energy ratio 4, rate 2/3 turbo code; Layered QPSK, energy ratio 6.25, rate 1/3 turbo code; Layered QPSK, energy ratio 6.25, rate ½ turbo code; and Layered QPSK, energy ratio 6.25, rate 2/3 turbo code. The term "energy ratio" refers, generally, to a ratio determined from the dimensions of the base layer relative to dimensions of the enhancement layer. For example, the energy ratio can be determined as a ratio of the base layer constellation distance squared to the enhancement layer constellation distance squared. Of course, the system is not limited to having eleven modes of operation, and other systems may have greater or fewer operating modes.

The model for the OFDM system may be expressed as:

$$\underline{r}_{N\times 1} = \underline{H}_{N\times 1} \circ \underline{x}_{N\times 1} + \underline{n}_{N\times 1} \quad , \qquad\qquad \text{Eq (3)}$$

where

$\underline{x}_{N\times 1}$ is an N×1 vector with N "transmit" symbols sent by the transmitter on the N subbands, with zeros being sent on the unused subbands;

$\underline{r}_{N\times 1}$ is an N ×1 vector with N "received" symbols obtained by the receiver for the N subbands;

$\underline{n}_{N\times 1}$ is an N × 1 noise vector for the N subbands; and

"o" denotes the Hadamard product, which is an element-wise product, where the *i*-th element of $\underline{r}_{N\times 1}$ is the product of the *i*-th elements of $\underline{x}_{N\times 1}$ and $\underline{H}_{N\times 1}$.

The noise $\underline{n}_{N\times 1}$ is assumed to be additive white Gaussian noise (AWGN) with zero mean and a variance of $\sigma^2$.

An initial estimate of the frequency response of the wireless channel, $\underline{\hat{H}}_{P\times 1}^{init}$, may be obtained as follows:

$$\underline{\hat{H}}_{P\times 1}^{init} = \underline{r}_{P\times 1}^{p} / \underline{x}_{P\times 1}^{p} = \underline{H}_{P\times 1}^{p} + \underline{n}_{P\times 1}^{p} / \underline{x}_{P\times 1}^{p} \quad , \qquad\qquad \text{Eq (4)}$$

where

$\underline{x}_{P\times 1}^{p}$ is a P × 1 vector with P pilot symbols sent on the P pilot subbands;

$\underline{r}_{P\times 1}^{p}$ is a P × 1 vector with P received pilot symbols for the P pilot subbands;

$\underline{H}_{P\times 1}^{p}$ is a P × 1 vector for the actual frequency response of the P pilot subbands;

$\underline{\hat{H}}_{P\times 1}^{init}$ is a P × 1 vector for the initial frequency response estimate;

$\underline{n}_{P\times 1}^{p}$ is a P × 1 noise vector for the P pilot subbands; and

$$\underline{r}_{P\times 1}^{p} / \underline{x}_{P\times 1}^{p} = [\hat{P}(s_1)/P(s_1) \quad \hat{P}(s_2)/P(s_2) \ \dots \ \hat{P}(s_P)/P(s_P)]^{T} \,,$$

where $\hat{P}(s_i)$ and $P(s_i)$ are respectively the received and transmitted pilot symbols for pilot subband $s_i$.

The P × 1 vectors $\underline{x}_{P\times 1}^{p}$, $\underline{r}_{P\times 1}^{p}$ and $\underline{n}_{P\times 1}^{p}$ include only P entries of the N×1 vectors $\underline{x}_{N\times 1}$, $\underline{r}_{N\times 1}$ and $\underline{n}_{N\times 1}$, respectively, corresponding to the P pilot subbands. As shown in equation (4), the receiver can obtain the initial frequency response estimate $\underline{\hat{H}}_{P\times 1}^{init}$ based on P element-wise ratios of the received pilot symbols to the transmitted pilot symbols for the P pilot subbands, i.e., $\underline{\hat{H}}_{P\times 1}^{init} = [\hat{H}(s_1) \quad \hat{H}(s_2) \ \dots \ \hat{H}(s_P)]^{T}$, where $\hat{H}(s_i) = \hat{P}(s_i)/P(s_i)$ is the channel gain estimate for subband $s_i$. The vector $\underline{\hat{H}}_{P\times 1}^{init}$ is indicative of the frequency response of the wireless channel for the P pilot subbands.

A frequency response estimate for the N total subbands may be obtained based on the initial frequency response estimate $\underline{\hat{H}}_{P\times 1}^{init}$ using various techniques. For a direct least-squares estimation technique, a least square estimate of the impulse response of the wireless channel is first obtained based on the following optimization:

$$\hat{\underline{h}}_{L \times 1}^{ls} = \min_{\underline{h}_{L \times 1}} \| \hat{\underline{H}}_{P \times 1}^{init} - \underline{W}_{P \times L} \underline{h}_{L \times 1} \|^2 \ , \qquad \text{Eq (5)}$$

where

$\underline{h}_{L \times 1}$ is an L $\times$ 1 vector for a hypothesized impulse response of the wireless channel;

$\underline{W}_{P \times L}$ is a P$\times$L sub-matrix of $\underline{W}_{N \times N}$ ; and

$\hat{\underline{h}}_{L \times 1}^{ls}$ is an L $\times$ 1 vector for the least square channel impulse response estimate.

The matrix $\underline{W}_{P \times L}$ contains P rows of the matrix $\underline{W}_{N \times N}$ corresponding to the P pilot subbands. Each row of $\underline{W}_{P \times L}$ contains L elements, which are the first L elements of the corresponding row of $\underline{W}_{N \times N}$. The optimization in equation (5) is over all possible channel impulse responses $\underline{h}_{L \times 1}$. The least square channel impulse response estimate $\hat{\underline{h}}_{L \times 1}^{ls}$ is equal to the hypothesized channel impulse response $\underline{h}_{L \times 1}$ that results in minimum mean square error between the initial frequency response estimate $\hat{\underline{H}}_{P \times 1}^{init}$ and the frequency response corresponding to $\underline{h}_{L \times 1}$, which is given by $\underline{W}_{P \times L} \underline{h}_{L \times 1}$.

The solution to the optimization problem posed in equation (5) may be expressed as:

$$\hat{\underline{h}}_{L \times 1}^{ls} = (\underline{W}_{P \times L}^{H} \underline{W}_{P \times L})^{-1} \underline{W}_{P \times L}^{H} \hat{\underline{H}}_{P \times 1}^{init} \ . \qquad \text{Eq (6)}$$

The frequency response estimate for the wireless channel may then be derived from the least square channel impulse response estimate, as follows:

$$\hat{\underline{H}}_{N \times 1}^{ls} = \underline{W}_{N \times L} \hat{\underline{h}}_{L \times 1}^{ls} \ , \qquad \text{Eq (7)}$$

where

$\underline{W}_{N \times L}$ is an N $\times$ L matrix with the first L columns of $\underline{W}_{N \times N}$; and

$\hat{\underline{H}}_{N \times 1}^{ls}$ is an N $\times$ 1 vector for the frequency response estimate for all N subbands.

The vector $\hat{\underline{H}}_{N \times 1}^{ls}$ can be computed in several manners. For example, the vector $\hat{\underline{h}}_{L \times 1}^{ls}$ can be computed first as shown in equation (6) and then used to compute the vector $\hat{\underline{H}}_{N \times 1}^{ls}$ as shown in equation (7). For equation (6), $(\underline{W}_{P \times L}^{H} \underline{W}_{P \times L})^{-1} \underline{W}_{P \times L}^{H}$ is an L$\times$P matrix that can be pre-computed. The impulse response estimate $\hat{\underline{h}}_{1 \times 1}^{ls}$ can then be obtained with L·P complex operations (or multiplications). For equation (7), the frequency response estimate $\hat{\underline{H}}_{N \times 1}^{ls}$ can be more efficiently computed by (1) extending the L$\times$1 vector $\hat{\underline{h}}_{L \times 1}^{ls}$ (with zero padding) to obtain an N$\times$ 1 vector $\hat{\underline{h}}_{N \times 1}^{ls}$ and (2) performing an N-point FFT on $\hat{\underline{h}}_{N \times 1}^{ls}$, which requires 0.5 N · log N complex operations. The frequency response estimate $\hat{\underline{H}}_{N \times 1}^{ls}$ can thus be obtained with a total of (L· P + 0.5 N · log N) complex operations for both equations (6) and (7).

Alternatively, the vector $\hat{\underline{\mathbf{H}}}_{N \times 1}^{ls}$ can be computed directly from the vector $\hat{\underline{\mathbf{H}}}_{P \times 1}^{init}$ by combining equations (6) and (7), as follows:

$$\hat{\underline{\mathbf{H}}}_{N \times 1}^{ls} = \underline{\mathbf{W}}_{N \times L} (\underline{\mathbf{W}}_{P \times L}^{H} \underline{\mathbf{W}}_{P \times L})^{-1} \underline{\mathbf{W}}_{P \times L}^{H} \hat{\underline{\mathbf{H}}}_{P \times 1}^{init} \quad , \qquad \qquad Eq\ (8)$$

where $\underline{\mathbf{W}}_{N \times L} (\underline{\mathbf{W}}_{P \times L}^{H} \underline{\mathbf{W}}_{P \times L})^{-1} \underline{\mathbf{W}}_{P \times L}^{H}$ is an NxP matrix that can be pre-computed. The frequency response estimate $\hat{\underline{\mathbf{H}}}_{N \times 1}^{ls}$ can then be obtained with a total of N·P complex operations.

For the two computation methods described above, the minimum number of complex operations needed to obtain $\hat{\underline{\mathbf{H}}}_{N \times 1}^{ls}$ for one OFDM symbol is $N_{op}=\min\{(L \cdot P+0.5N \cdot \log N), N \cdot P\}$. If pilot symbols are transmitted in each OFDM symbol, then the rate of computation is $N_{op} / T_{sym}$ million operations per second (Mops), which is $N_{op} \cdot BW / N$ Mops, where $T_{sym}$ is the duration of one OFDM symbol and is equal to N/BW μsec with no cyclic prefix (described below). The number of complex operations, $N_{op}$, can be very high for an OFDM system with a large number of subbands. As an example, for an OFDM system with an overall bandwidth of BW = 6 MHz, N = 4096 total subbands, P= 512 pilot subbands, and L = 512 taps, 420 Mops are needed to compute $\hat{\underline{\mathbf{H}}}_{N \times 1}^{ls}$ using equations (6) and (7). Since equation (6) requires 384 Mops and equation (7) requires 36 Mops, the computation for the least square channel impulse response estimate in equation (6) is significantly more burdensome than the computation for the N-point FFT in equation (7).

Pilot transmission scheme 200 in FIG. 2 does not impose a constraint on the locations of the pilot subbands. The matrix $\underline{\mathbf{W}}_{P \times L}$ contains P rows of the matrix $\underline{\mathbf{W}}_{N \times N}$ corresponding to the P pilot subbands. This results in the need for P complex operations for each of the L entries of the vectors $\hat{\underline{\mathbf{h}}}_{L \times 1}^{ls}$.

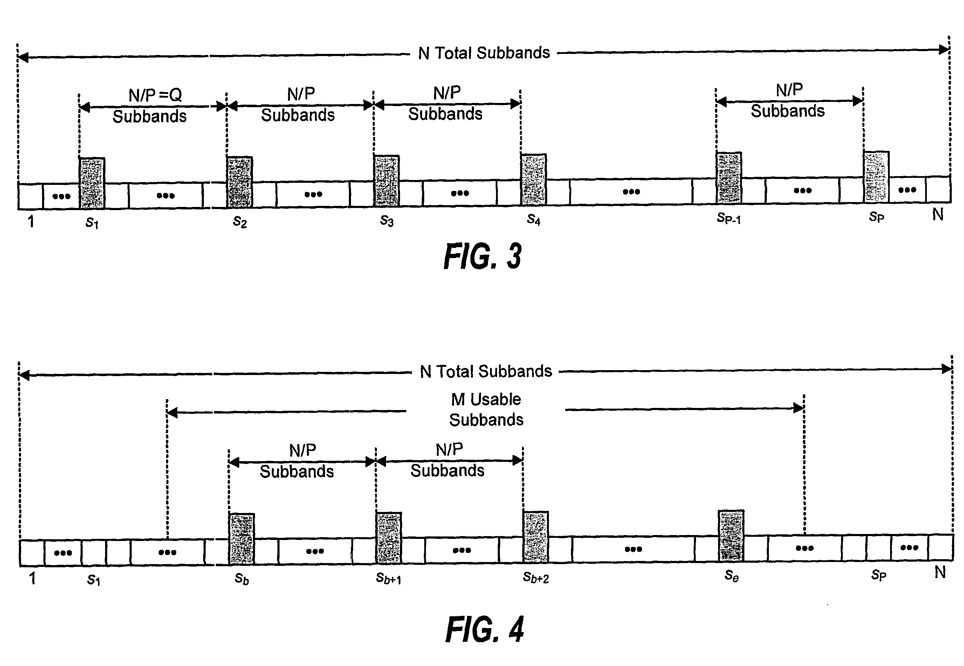

**FIG. 3** shows a uniform pilot transmission scheme 300 that can simplify the computation for a least square channel impulse response estimate $\hat{\underline{\mathbf{h}}}_{P \times 1}^{ls}$. For scheme 300, the P pilot subbands are uniformly distributed across the N total subbands such that consecutive pilot subbands are spaced apart by N/P subbands. Furthermore, the number of taps is assumed to be equal to the number of pilot subbands (i.e., L = P).

The uniform transmission scheme shown in FIG. 3 can be configured as Q= N/P subband sets, where one of the subband sets is configured as the pilot signal and N/P - 1 subband sets can be allocated to data. Each of the data subband sets can also be configured as P data subbands uniformly distributed across the N total subbands.

In one example, the total number of subbands, N, can be 4096 and the number of subband sets, Q, can be 8. Thus, there are P=512 subbands in each subband set, with the subbands occurring periodically across the band, occurring once every eight subbands.

In this case, $\underline{\mathbf{W}}_{P \times P}$ is a P× P DFT matrix, $\underline{\mathbf{W}}_{P \times P}^{H} \underline{\mathbf{W}}_{P \times P} = \underline{\mathbf{I}}$ where $\underline{\mathbf{I}}$ is the identity matrix, and equation (6) can be simplified as:

$$\hat{\underline{\mathbf{h}}}_{P \times 1}^{ls} = \underline{\mathbf{W}}_{P \times P}^{H} \hat{\underline{\mathbf{H}}}_{P \times 1}^{init} \quad . \qquad \qquad Eq\ (9)$$

Equation (9) indicates that the channel impulse response estimate $\hat{\underline{\mathbf{h}}}_{P \times 1}^{ls}$ can be obtained by performing a P-point IFFT on the initial frequency response estimate $\hat{\underline{\mathbf{H}}}_{P \times 1}^{init}$. The vector $\hat{\underline{\mathbf{h}}}_{P \times 1}^{ls}$ can be zero-padded to length N. The zero-padded vector $\hat{\underline{\mathbf{h}}}_{N \times 1}^{ls}$ can then be transformed with an N-point FFT to obtain the vector $\hat{\underline{\mathbf{H}}}_{N \times 1}^{ls}$, as follows:

$$\hat{\underline{\mathbf{H}}}^{ls}_{N\times 1} = \underline{\mathbf{W}}_{N\times N}\, \hat{\underline{\mathbf{h}}}^{ls}_{N\times 1} \; . \qquad\qquad\qquad\qquad Eq\ (10)$$

An $S \times 1$ vector $\hat{\underline{\mathbf{H}}}^{ls}_{S\times 1}$ for the frequency response estimate for S subbands of interest may also be obtained based on the vector $\hat{\underline{\mathbf{h}}}^{ls}_{P\times 1}$, where in general $N \geq S \geq P$. If S is a power of two, then an S-point FFT can perform to obtain $\hat{\underline{\mathbf{H}}}^{ls}_{S\times 1}$.

With pilot transmission scheme 300, the number of complex operations required to obtain $\hat{\underline{\mathbf{H}}}^{ls}_{N\times 1}$ for one OFDM symbol is $N_{op} = 0.5 \cdot (P \cdot \log P + N \cdot \log N)$ and the rate of computation is $0.5 \cdot BW \cdot (P \cdot \log P + N \cdot \log N) / N$ Mops. For the exemplary OFDM system described above, $\hat{\underline{\mathbf{H}}}^{ls}_{N\times 1}$ can be computed with 39.38 Mops using pilot transmission scheme 300, which is much less than the 420 Mops needed for pilot transmission scheme 200.

The reduced-complexity least square channel impulse response estimation described above in equations (9) and (10) relies on two key assumptions:

1. The P pilot subbands are periodic across the N total subbands, and
2. The number of taps is equal to the number of pilot subbands (i.e., L = P).

These two assumptions impose important restrictions/limitations in a practical OFDM system. First, for some OFDM systems, it may not be possible to transmit pilot symbols on P subbands uniformly distributed across the N total subbands. For example, in a spectrally shaped OFDM system, no symbols are transmitted on the guard subbands in order to meet spectral mask requirements. As another example, an OFDM system may not permit pilot/data transmission on certain subbands (e.g., zero or DC subband). As yet another example, pilot may not be available for some subbands due to receiver filter implementation and/or other reasons. For these systems, strict periodicity of the P pilot subbands across the entire N total subbands is typically not possible. Second, the assumption of L = P (which is less serious than the first assumption) can degrade the quality of the final channel frequency response estimate $\hat{\underline{\mathbf{H}}}^{ls}_{N\times 1}$. It can be shown that the quality of the channel estimate can degrade by as much as 3 dB from an optimal channel estimate if (1) L is assumed to be equal to P, (2) the pilot symbol energy is the same as the data symbol energy, and (3) time-domain filtering is not performed on $\hat{\underline{\mathbf{h}}}^{ls}_{P\times 1}$ or $\hat{\underline{\mathbf{H}}}^{ls}_{N\times 1}$ to capture additional energy. This amount of degradation in the channel estimate quality may not be acceptable for some systems.

Various techniques may be used to overcome the two restrictions described above. First, extrapolation and/or interpolation may be used, as necessary, to obtain channel gain estimates for P uniformly spaced subbands based on the received pilot symbols. This allows the channel impulse response estimate $\hat{\underline{\mathbf{h}}}^{ls}_{P\times 1}$ to be derived with a P-point IFFT.

Second, tap selection may be performed on the P elements of $\hat{\underline{\mathbf{h}}}^{ls}_{P\times 1}$ to obtain a higher quality channel estimate. Extrapolation/interpolation and tap selection are described in detail below.

**FIG. 4** shows a uniform pilot transmission scheme 400 for a spectrally shaped OFDM system. For scheme 400, the P pilot subbands are uniformly distributed across the N total subbands such that consecutive pilot subbands are spaced apart by N/P subbands, similar to scheme 300. Again, the subbands spanning each pilot subband can be allocated to a data subband set. However, pilot symbols are transmitted only on pilot subbands that are among the M usable subbands (or simply, the "active pilot subbands"). No pilot or data symbols are transmitted on pilot subbands that are among the N-M guard subbands (or simply, the "inactive pilot subbands"). The receiver thus obtains pilot symbols for the active pilot subbands and no pilot symbols for the inactive pilot subbands.

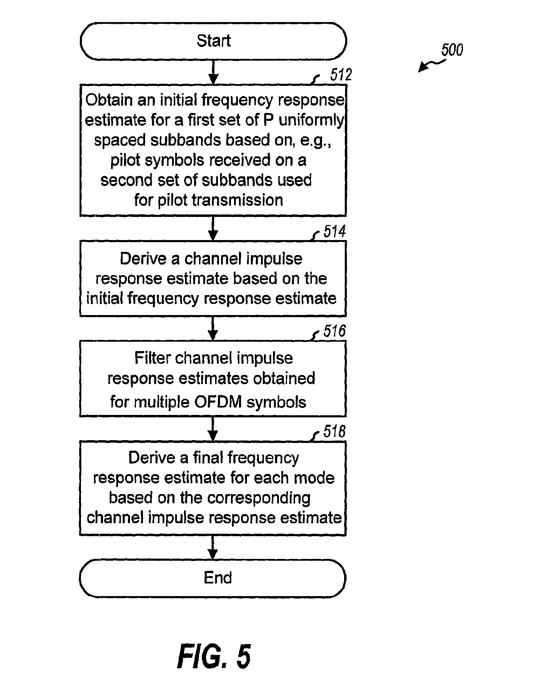

**FIG. 5** shows a process 500 for obtaining the frequency response estimate $\hat{\underline{\mathbf{H}}}^{ls}_{N\times 1}$ for each mode within or associated with each OFDM symbol of the multiple-access wireless channel in the spectrally shaped OFDM system. An OFDM symbol may be characterized with one or more modes, including modulation scheme, code rate, modulation layers, etc. For a layered modulation scheme, a symbol may be characterized with both base and enhancement frequency response estimates, $\hat{\underline{\mathbf{H}}}^{ls}_{N\times 1}$. An initial frequency response estimate for a first set of P uniformly spaced subbands is obtained based on, for example, pilot symbols received on a second set of subbands used for pilot transmission (block 512). The first set includes at least one subband not included in the second set (e.g., pilot subbands among the guard subbands). An impulse response estimate for the wireless channel is next derived based on the initial frequency response estimate (block 514). Channel impulse response estimates for multiple OFDM symbols may be filtered to obtain a higher quality channel estimate (block 516). A final frequency response estimate for each mode in each OFDM symbol of the OFDM wireless channel is then derived based on the (filtered or unfiltered) channel impulse response estimate (block 518). Filtering may also be performed on the initial or final frequency response estimate (instead of the channel impulse response estimate) to obtain higher quality channel estimate.

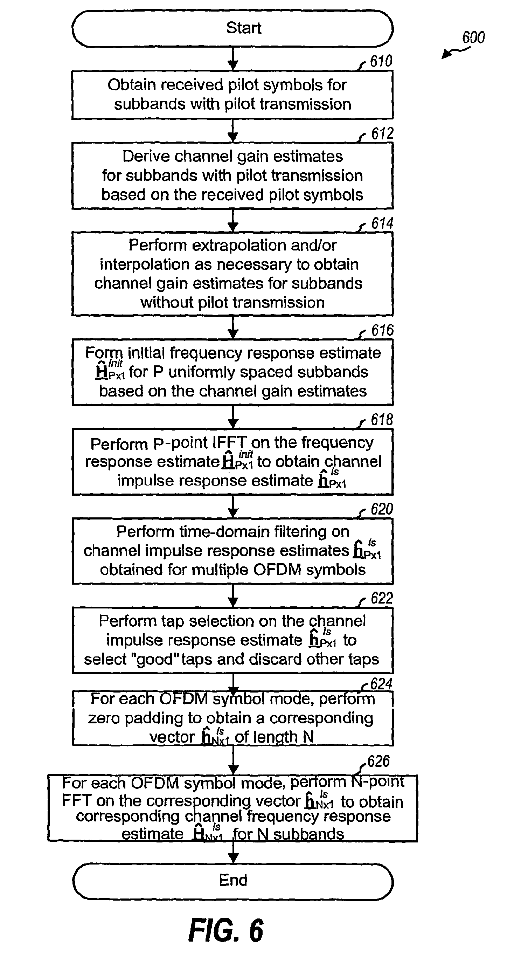

**FIG. 6** shows a specific process 600 for obtaining the frequency response estimate $\hat{\underline{H}}_{N\times1}^{ls}$ in the spectrally shaped OFDM system. Initially, received pilot symbols are obtained for $P_{act}$ active pilot subbands with pilot transmission (block 610). Channel gain estimates $\hat{h}(s_i)$ for the $P_{act}$ active pilot subbands are then derived based on the received pilot symbols (block 612). The output of block 612 is a $P_{act} \times 1$ vector $\hat{\underline{H}}_{P_{act}\times1}^{init}$ for the initial frequency response estimate for the $P_{act}$ active pilot subbands. Extrapolation and/or interpolation are performed as necessary to obtain channel gain estimates for $P_{ext}$ subbands without pilot transmission, as described below (block 614). The output of block 614 is a $P_{ext} \times 1$ vector $\hat{\underline{H}}_{P_{ext}\times1}^{init}$ for the initial frequency response estimate for the $P_{ext}$ subbands without pilot transmission. The P $\times$ 1 vector $\hat{\underline{H}}_{P\times1}^{init}$ for the initial frequency response estimate for P uniformly spaced subbands is then formed based on the channel gain estimates from the vectors $\hat{\underline{H}}_{P_{act}\times1}^{init}$ and $\hat{\underline{H}}_{P_{ext}\times1}^{init}$, e.g., $\hat{\underline{H}}_{P\times1}^{init} = [\hat{\underline{H}}_{P_{act}\times1}^{init} \ \hat{\underline{H}}_{P_{ext}\times1}^{init}]^T$ (block 616). The channel gain estimate for each of the P subbands may be derived based on either a received pilot symbol or extrapolation/interpolation.

A P-point IFFT is then performed on the vector $\hat{\underline{H}}_{P\times1}^{init}$ to obtain the P $\times$ 1 vector $\hat{\underline{h}}_{P\times1}^{ls}$ for the least square channel impulse response estimate, as shown in equation (9) (block 618). Time-domain filtering may be performed on the channel impulse response estimates $\hat{\underline{h}}_{P\times1}^{ls}$ for multiple OFDM symbols to obtain a higher quality channel estimate (block 620). The time-domain filtering may be omitted or may be performed on frequency response estimates instead of impulse response estimates. The (filtered or unfiltered) vector $\hat{\underline{h}}_{P\times1}^{ls}$ includes P entries for L taps, where L is typically less than P. The vector $\hat{\underline{h}}_{P\times1}^{ls}$ is then processed to select "good" taps and discard or zero out remaining taps, as described below (block 622). For each mode, zero padding is also performed to obtain the corresponding N$\times$1 vector $\hat{\underline{h}}_{N\times1}^{ls}$ for the channel impulse response estimate (block 624). An N-point FFT is then performed on the each vector $\hat{\underline{h}}_{N\times1}^{ls}$ to obtain the vector $\hat{\tilde{\underline{H}}}_{N\times1}^{ls}$ for the final frequency response estimate for each mode for the N total subbands (block 626).

### Extrapolation/Interpolation

For block 614 in FIG. 6, extrapolation can be used to obtain channel gain estimates for inactive pilot subbands that are located among the guard subbands. For a function $y = f(x)$, where a set of $y$ values is available for a set of $x$ values within a known range, extrapolation can be used to estimate a $y$ value for an $x$ value outside of the known range. For channel estimation, $x$ corresponds to pilot subband and $y$ corresponds to channel gain estimate. Extrapolation can be performed in various manners.

In one extrapolation scheme, the channel gain estimate for each inactive pilot subband is set equal to the channel gain estimate for the nearest active pilot subband, as follows:

$$\hat{H}(s_i) = \begin{cases} \hat{H}(s_b) & \text{for } s_i < s_b \\ \hat{H}(s_e) & \text{for } s_i > s_e \end{cases} \qquad\qquad \text{Eq (11)}$$

where $\hat{H}(s_i)$ is the channel gain estimate for subband $s_i$, $s_b$ is the first active pilot subband, and $s_e$ is the last active pilot subband, as shown in FIG. 4.

In another extrapolation scheme, the channel gain estimate for each inactive pilot subband is obtained based on a weighted sum of the channel gain estimates for the active pilot subbands. If the number of taps L is less than or equal to the number of active pilot subbands (i.e., $L \le P_{act}$), then (in the absence of noise) the wireless channel can be completely characterized by the channel gain estimates for the active pilot subbands. For the extrapolation, each inactive pilot subband is associated with a respective set of extrapolation coefficients, one coefficient for each active pilot subband, where each coefficient may be a zero or non-zero value. The extrapolation/interpolation for the inactive pilot subbands may be expressed in matrix form, as follows:

$$\underline{\hat{\mathbf{H}}}^{init}_{P_{ext}\times 1} = \underline{\mathbf{C}}_{P_{ext}\times P_{act}} \underline{\hat{\mathbf{H}}}^{init}_{P_{act}\times 1} \quad , \qquad\qquad \text{Eq (12)}$$

where $\underline{\mathbf{C}}_{P_{ext}\times P_{act}}$ is a $P_{ext} \times P_{act}$ matrix of extrapolation coefficients.

The number of complex operations required for extrapolation in equation (12) is $P_{ext} \cdot P_{act}$. The number of inactive pilot subbands is $P_{ext} = \left\lceil \dfrac{P_{act} \cdot G}{N} \right\rceil$, where G is the number of guard subbands and "$\lceil x \rceil$" is a ceiling operator that provides the next higher integer for x. The number of inactive pilot subbands in the system is typically small if the number of guard subbands is small. For example, the OFDM system described above may have only 10 inactive pilot subbands (i.e., $P_{ext} = 10$) out of 512 pilot subbands (i.e., P = 512) if there are 80 guard subbands (i.e., G = 80). In this case, the computation required for extrapolation does not greatly increase computational complexity. The computational complexity can also be reduced explicitly by restricting the extrapolation to use a subset of the active pilots.

The extrapolation coefficients can be fixed and determined offline (i.e., pre-computed) based on a criterion such as least-squares, minimum mean square error (MMSE), and so on. For least-squares extrapolation, a coefficient matrix $\underline{\mathbf{C}}^{ls}_{P_{ext}\times P_{act}}$ may be defined as follows:

$$\underline{\mathbf{C}}^{ls}_{P_{ext}\times P_{act}} = \underline{\mathbf{W}}_{P_{ext}\times L}(\underline{\mathbf{W}}^{H}_{P_{act}\times L}\underline{\mathbf{W}}_{P_{act}\times L})^{-1}\underline{\mathbf{W}}^{H}_{P_{act}\times L} \quad , \qquad\qquad \text{Eq (13)}$$

where $\underline{\mathbf{W}}_{P_{ext}\times L}$ is a $P_{act} \times L$ sub-matrix of $\underline{\mathbf{W}}_{N\times N}$. In a practical system, the matrix $\underline{\mathbf{W}}^{H}_{P_{act}\times L}\underline{\mathbf{W}}_{P_{act}\times L}$ may be "ill-conditioned", which means that the computation of the inverse of this matrix may face numerical stability issues. In this case, a correction term may be used to get around the ill-conditioning problem, and a modified least-squares extrapolation matrix $\underline{\mathbf{C}}^{mls}_{P_{ext}\times P_{act}}$ may be defined as follows:

$$\underline{\mathbf{C}}^{mls}_{P_{ext}\times P_{act}} = \underline{\mathbf{W}}_{P_{ext}\times L}(\underline{\mathbf{W}}^{H}_{P_{act}\times L}\underline{\mathbf{W}}_{P_{act}\times L} + \delta\underline{\mathbf{I}})^{-1}\underline{\mathbf{W}}^{H}_{P_{act}\times L} \quad , \qquad\qquad \text{Eq (14)}$$

where $\delta$ is a small correction factor.

For MMSE extrapolation, a coefficient matrix $\underline{\mathbf{C}}^{mmse}_{P_{ext} \times P_{act}}$ may be defined as follows:

$$\underline{\mathbf{C}}^{mmse}_{P_{ext} \times P_{act}} = \eta\gamma \underline{\mathbf{W}}_{P_{ext} \times L} \underline{\mathbf{W}}^{H}_{P_{act} \times L}(\gamma \underline{\mathbf{W}}_{P_{act} \times L} \underline{\mathbf{W}}^{H}_{P_{act} \times L} + \underline{\mathbf{I}})^{-1} \; , \qquad\qquad \text{Eq (15)}$$

where

$\gamma$ the signal-to-noise ratio (SNR) of the received pilot symbols; and
$\eta$ is a factor used to derive an unbiased estimate.

In the absence of SNR information, $\gamma$ may be considered as a parameter that can be selected to optimize performance. The factor $\eta$ is a scalar quantity may also be used to optimize performance. The vector $\hat{\mathbf{H}}^{init}_{P_{ext} \times 1}$ obtained with $\underline{\mathbf{C}}^{mmse}_{P_{ext} \times P_{act}}$ is an MMSE estimate
of the channel under the assumption that the taps in the time-domain are uncorrelated and are of equal energy. Equation (15) assumes that the autocovariance matrix of the noise vector $\underline{\mathbf{n}}^{p}_{P_{act} \times 1}$ for the $P_{act}$ active pilot subband is the identity matrix. Equation (15) may be modified to account for this autocovariance matrix if it is known by the receiver.

In yet another extrapolation scheme, the channel gain estimate for each inactive pilot subband is set equal to zero, i.e., $\hat{H}(s_j) = 0$ for $s_i < s_b$ and $s_i > s_e$. The extrapolation may also be performed in other manners, and this is within the scope of the invention. For example, functional extrapolation techniques such as linear and quadratic extrapolation may be used. Non-linear extrapolation techniques may also be used, which fall within the general framework of equation (12).

A pilot transmission scheme may not distribute the active pilot subbands uniformly across the M usable subbands. In this case, interpolation may also be used to obtain channel gain estimates for uniformly spaced subbands within the M usable subbands. The interpolation may be performed in various manners, similar to that described above for extrapolation. In general, extrapolation and/or interpolation may be performed as necessary based on the available received pilot symbols to obtain channel gain estimates for P subbands uniformly spaced across the N total subbands.

**Tap Processing**

For block 622 in FIG. 6, tap processing is performed on the vector $\hat{\underline{\mathbf{h}}}^{ls}_{P \times 1}$ to select or otherwise determine good taps for the channel impulse response estimate. A "good" tap refers to a tap whose value contributes to the channel impulse response estimate without contributing undue noise. What constitutes an undue noise contribution may depend on a variety of factors, including, but not limited to, an operating mode of the data subbands for which the final channel estimate is associated, a channel model, other system parameters, or a combination of factors or parameters. The tap processing may be performed in various manners. The processing of the tap values in of the channel impulse response estimate may be based on the tap delay, tap energy, magnitude, or amplitude, or on some combination of delay and energy, magnitude, or amplitude.

**Tap Truncation**

In one tap processing scheme, the channel impulse response estimate $\hat{\underline{\mathbf{h}}}^{ls}_{P \times 1}$ is truncated to L values for the L taps of the wireless channel. The vector $\hat{\underline{\mathbf{h}}}^{ls}_{P \times 1}$ contains P elements, where $P \geq L$. The P elements span a delay spread determined by the number of taps, P, and the original time interval over which the samples are taken. However, the delay spread of the channel impulse response may be truncated to a shorter delay spread without significantly affecting the channel impulse response estimate and the resulting final channel frequency response.

For this deterministic tap selection scheme, the first L elements of $\hat{\underline{\mathbf{h}}}^{ls}_{P \times 1}$ are considered as good taps and retained, and the last P-L elements are replaced with zeros. When L < P, the least squares channel impulse response estimate with L taps can be obtained (without loss in performance) by assuming a channel with P taps, performing a P-point IFFT, and truncating the last P-L taps. This has some benefits in certain situations. For example, if L < P/2 , then the least squares channel impulse response estimate can be derived with the computational benefits of the FFT and not computing the last P/2 taps.

The truncation length, L, can be predetermined, and can be based at least in part on the operating mode. There may be a distinct truncation length, L, for each possible operating mode. In such an embodiment, the receiver can determine in which mode the data subbands are operating and select the truncation length from a plurality of truncation length values stored in memory.

**Tap Magnitude Thresholding**

In another tap selection scheme, the elements of $\hat{\underline{\mathbf{h}}}_{P\times1}^{ls}$ with low energy are replaced with zeros. Alternatively, the elements of having low energy can be replaced or otherwise processed to result in substantially negligible values for these taps. These elements of $\hat{\underline{\mathbf{h}}}_{P\times1}^{ls}$ correspond to taps with low energy, where the low energy is likely due to noise rather than signal energy. A threshold is used to determine whether a given element/tap has sufficient energy and should be retained or should be zeroed out. This process may be referred to as "thresholding".

The threshold can be computed based on various factors and in various manners. The threshold can be a relative value (i.e., dependent on the measured channel response) or an absolute value (i.e., not dependent on the measured channel response). A relative threshold can be computed based on the (e.g., total or average) energy of the channel impulse response estimate. The use of the relative threshold ensures that (1) the thresholding is not dependent on variations in the received energy and (2) the elements/taps that are present but with low signal energy are not zeroed out. An absolute threshold can be computed based on the noise variance/noise floor at the receiver, the lowest energy expected for the received pilot symbols, and so on. The use of the absolute threshold forces the elements of $\hat{\underline{\mathbf{h}}}_{P\times1}^{ls}$ to meet some minimum value in order to be retained. The threshold can also be computed based on a combination of factors used for relative and absolute thresholds. For example, the threshold can be computed based on the energy of the channel impulse response estimate and further constrained to be equal to or greater than a predetermined minimum value.

The thresholding can be performed in various manners. In one thresholding scheme, the thresholding is performed after the truncation and may be expressed as:

$$\hat{h}(n) = \begin{cases} 0 & \text{for } |\hat{h}(n)|^2 < \alpha \cdot \| \hat{\underline{\mathbf{h}}}_{P\times1}^{ls} \|^2 / L , \\ \hat{h}(n) & \text{otherwise} \end{cases} \text{ for } n = 0 \ ... \ L-1 \qquad \text{Eq (16)}$$

where

$\hat{\underline{\mathbf{h}}}_{P\times1}^{ls} = [\hat{h}(0) \ \hat{h}(1) \ ... \ \hat{h}(P-1)]^T$ , where the last P - L elements are replaced with zeros by the truncation;

$|\hat{h}(n)|^2$ is the energy of the *n*-th tap;

$\| \hat{\underline{\mathbf{h}}}_{P\times1}^{ls} \|^2$ is the energy of the channel impulse response estimate for the L taps; and

$\alpha \cdot \| \hat{\underline{\mathbf{h}}}_{P\times1}^{ls} \|^2 / L$ is the threshold used to zero out low energy elements/taps.

$\|\underline{\mathbf{x}}\|^2$ is the norm of vector $\underline{\mathbf{x}}$ and is equal to the sum of the squares of all of the elements in the vector $\underline{\mathbf{x}}$.

In equation (16), the threshold is defined based on the average energy of the L taps. The coefficient $\alpha$ is selected based on a trade off between noise suppression and signal deletion. A higher value for $\alpha$ provides more noise suppression but also increases the likelihood of a low signal energy element/tap being zeroed out. The coefficient $\alpha$ can be a value within a range of 0 to 1 (e.g., $\alpha = 0.1$). The threshold can also be defined based on the total energy (instead of the average energy) for the channel impulse response estimate $\hat{\underline{\mathbf{h}}}_{P\times1}^{ls}$.

The threshold may be fixed or adapted based on the operating mode of the data subbands for which the channel estimate is to be used. For example, the threshold value can be based on (1) the particular coding and modulation scheme or rate of the data stream being demodulated (2) a bit error rate (BER), packet error rate (PER), block error rate (BLER), or some other error rate performance requirement, and/or (3) some other parameters and considerations.

A receiver that is configured to support one or more modes can be configured to store at least one predetermined threshold value for each mode. The receiver can determine which mode the data subbands are operating and can select the appropriate threshold from a plurality of threshold values stored in memory. The tap values of the impulse response or values derived from the tap values can be compared against the threshold or a value determined based on the threshold value. For example, a receiver can store a plurality of $\alpha$ values, with each $\alpha$ value corresponding to a distinct mode. The receiver can determine the operating mode and can determine a threshold based on the corresponding a value. The individual tap energy values can be compared against the threshold value, and taps having energy values less than the threshold value can be set to zero.

In another thresholding scheme, the thresholding is performed on all P elements of $\hat{\underline{\mathbf{h}}}_{P\times 1}^{ls}$ (i.e., without truncation) using a single threshold, similar to that shown in equation (16). In yet another thresholding scheme, the thresholding is performed on all P elements of $\hat{\underline{\mathbf{h}}}_{P\times 1}^{ls}$ using multiple thresholds. For example, a first threshold may be used for the first L elements of $\hat{\underline{\mathbf{h}}}_{P\times 1}^{ls}$, and a second threshold may be used for the last P - L elements of $\hat{\underline{\mathbf{h}}}_{P\times 1}^{ls}$. The second threshold may be set lower than the first threshold. In yet another thresholding scheme, the thresholding is performed on only the last P - L elements of $\hat{\underline{\mathbf{h}}}_{P\times 1}^{ls}$ and not on the first L elements. The thresholding may be performed in other manners.

Thresholding is well suited for a wireless channel that is "sparse", such as a wireless channel in a macro-cellular broadcast system. A sparse wireless channel has much of the channel energy concentrated in few taps. Each tap corresponds to a resolvable signal path with different time delay. A sparse channel includes few signal paths even though the delay spread (i.e., time difference) between these signal paths may be large. The taps corresponding to weak or non-existing signal paths can be zeroed out or otherwise made insignificant.

## Channel Estimate Filtering

For block 518 in FIG. 5 and block 620 in FIG. 6, the channel impulse response estimate may be filtered in the time domain using a lowpass filter such as a finite impulse response (FIR) filter, an infinite impulse response (IIR) filter, or some other type of filter. The lowpass filter may be a causal filter (which performs filtering on past and current samples) or a non-causal filter (which performs filtering on past, current, and future samples obtained by buffering). For example, for non-causal filter types, the receiver can buffer or otherwise store multiple channel estimates and can determine a non-causal filter output for a given channel estimate using later occurring channel estimates. From the reference point of a given channel estimate, channel estimates based on later received symbols are future samples.

The characteristics (e.g., bandwidth) of the filter may be selected based on the characteristics of the wireless channel. Time-domain filtering may be performed separately for each tap of the channel impulse response estimate across multiple OFDM symbols. The same or different filters may be used for the taps of the channel impulse response estimate. The coefficients for each such filter may be fixed or may be adjustable based on detected channel conditions. Performing the filtering in the time domain has an advantage in that the pilot subbands can be staggered in the frequency domain (i.e., different sets of pilot subbands may be used for different OFDM symbols). The staggering of pilot subbands is useful when the channel has an excess delay spread (i.e., the channel impulse response has a length greater than P taps). A channel impulse response estimate with more than P taps can be obtained with the additional and different pilot subbands provided by staggering. The filtering may also be performed on the initial or final frequency response estimates.

## OFDM System

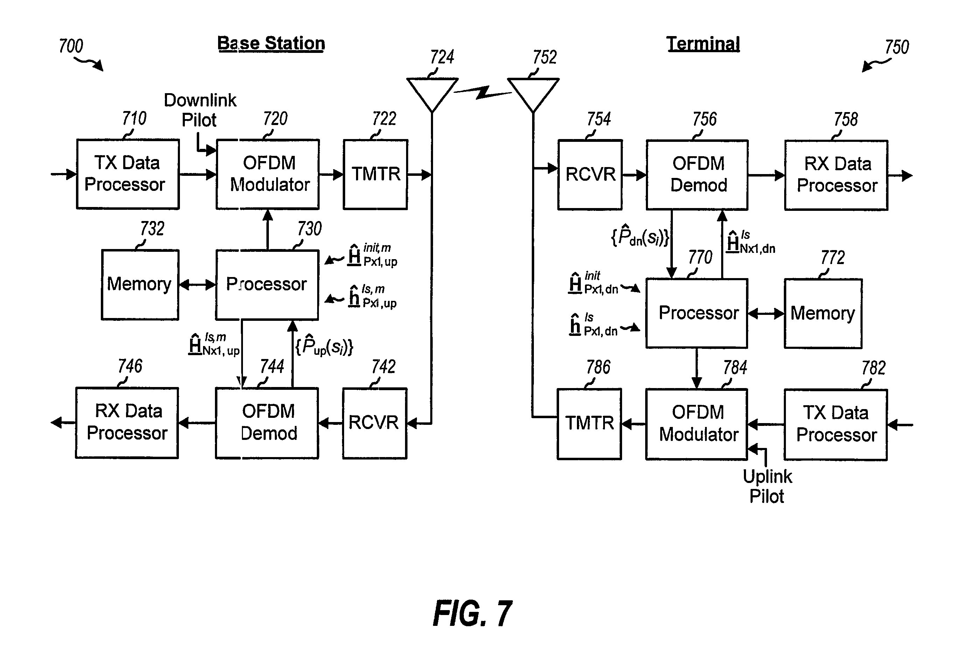

**FIG. 7** shows a block diagram of an access point 700 and a terminal 750 in a spectrally shaped OFDM system. On the downlink, at access point 700, a transmit (TX) data processor 710 receives, formats, codes, interleaves, and modulates (i.e., symbol maps) traffic data and provides modulation symbols (or simply, "data symbols"). An OFDM modulator 720 receives and processes the data symbols and pilot symbols and provides a stream of OFDM symbols. OFDM modulator 720 multiplexes data and pilot symbols on the proper subbands, provides a signal value of zero for each unused subband, and obtains a set of N transmit symbols for the N subbands for each OFDM symbol period. Each transmit symbol may be a data symbol, a pilot symbol, or a signal value of zero. The pilot symbols may be sent on active pilot subbands, as shown in FIG. 4. The pilot symbols may be sent continuously in each OFDM symbol period. Alternatively, the pilot symbols may be time division multiplexed (TDM) with the data symbols on the same subband.

OFDM modulator 720 further transforms each set of N transmit symbols to the time domain using an N-point IFFT to obtain a "transformed" symbol that contains N time-domain chips. OFDM modulator 720 typically repeats a portion of each transformed symbol to obtain a corresponding OFDM symbol. The repeated portion is known as a cyclic prefix and is used to combat delay spread in the wireless channel.

A transmitter unit (TMTR) 722 receives and converts the stream of OFDM symbols into one or more analog signals and further conditions (e.g., amplifies, filters, and frequency upconverts) the analog signals to generate a downlink signal suitable for transmission over the wireless channel. The downlink signal is then transmitted via an antenna 724 to the terminals.

At terminal 750, an antenna 752 receives the downlink signal and provides a received signal to a receiver unit (RCVR) 754. Receiver unit 754 conditions (e.g., filters, amplifies, and frequency downconverts) the received signal and digitizes the conditioned signal to obtain samples. An OFDM demodulator 756 removes the cyclic prefix appended to each OFDM symbol, transforms each received transformed symbol to the frequency domain using an N-point FFT, obtains N received symbols for the N subbands for each OFDM symbol period, and provides received pilot symbols $\{\hat{P}_{dn}(s_i)\}$ to a processor 770 for channel estimation.

OFDM demodulator 756 further receives a frequency response estimate $\hat{\underline{H}}^{ls}_{N\times1,dn}$ for the downlink from processor 770, performs data demodulation on the received data symbols to obtain data symbol estimates (which are estimates of the transmitted data symbols), and provides the data symbol estimates to an RX data processor 758. RX data processor 758 demodulates (i.e., symbol demaps), deinterleaves, and decodes the data symbol estimates to recover the transmitted traffic data. The processing by OFDM demodulator 756 and RX data processor 758 is complementary to the processing by OFDM modulator 720 and TX data processor 710, respectively, at access point 700.

Processor 770 obtains the received pilot symbols for the active pilot subbands and performs channel estimation as shown in FIGS. 5 and 6. Processor 770 performs extrapolation and/or interpolation as necessary to obtain channel gain estimates for $P_{dn}$ uniformly spaced subbands (where $P_{dn}$ is the number of pilot subbands for the downlink), derives a least square impulse response estimate $\hat{\underline{h}}^{ls}_{P\times1,dn}$ for the downlink, performs tap processing for the P elements/taps of $\hat{\underline{h}}^{ls}_{P\times1,dn}$, and derives the final frequency response estimate $\hat{\underline{H}}^{ls}_{N\times1,dn}$ for the N subbands for the downlink.

On the uplink, a TX data processor 782 processes traffic data and provides data symbols. An OFDM modulator 784 receives and multiplexes the data symbols with pilot symbols, performs OFDM modulation, and provides a stream of OFDM symbols. The pilot symbols may be transmitted on $P_{up}$ subbands that have been assigned to terminal 750 for pilot transmission, where the number of pilot subbands ($P_{up}$) for the uplink may be the same or different from the number of pilot subbands ($P_{dn}$) for the downlink. The pilot symbols may also be multiplexed with the data symbols using TDM. A transmitter unit 786 then receives and processes the stream of OFDM symbols to generate an uplink signal, which is transmitted via an antenna 752 to the access point.

At access point 700, the uplink signal from terminal 150 is received by antenna 724 and processed by a receiver unit 742 to obtain samples. An OFDM demodulator 744 then processes the samples and provides received pilot symbols $\{\hat{P}_{up}(s_i)\}$ and data symbol estimates for the uplink. An RX data processor 746 processes the data symbol estimates to recover the traffic data transmitted by terminal 750.

Processor 730 performs channel estimation for each active terminal transmitting on the uplink as shown in FIGS. 5 and 6. Multiple terminals may transmit pilot concurrently on the uplink on their respective assigned sets of pilot subbands, where the pilot subband sets may be interlaced. For each terminal $m$, processor 730 performs extrapolation and/or interpolation as needed for the terminal, obtains an initial frequency response estimate $\hat{\underline{H}}^{init,m}_{P\times1,up}$ for the uplink for the terminal, derives a least square channel impulse response estimate $\hat{\underline{h}}^{ls,m}_{P\times1,up}$ for the terminal based on $\hat{\underline{H}}^{init,m}_{P\times1,up}$, performs tap selection, and further obtains a final frequency response estimate $\hat{\underline{H}}^{ls,m}_{N\times1,up}$ for the terminal. The frequency response estimate $\hat{\underline{H}}^{ls,m}_{N\times1,up}$ for each terminal is provided to OFDM demodulator 744 and used for data demodulation for that terminal.

Processors 730 and 770 direct the operation at access point 700 and terminal 750, respectively. Memory units 732 and 772 store program codes and data used by processors 730 and 770, respectively. Processors 730 and 770 also perform the computation described above to derive frequency and impulse response estimates for the uplink and downlink, respectively.

For a multiple-access OFDM system (e.g., an orthogonal frequency division multiple-access (OFDMA) system), multiple terminals may transmit concurrently on the uplink. For such a system, the pilot subbands may be shared among different terminals. The channel estimation techniques may be used in cases where the pilot subbands for each terminal span the entire operating band (possibly except for the band edges). Such a pilot subband structure would be desirable to obtain frequency diversity for each terminal.

## OFDM Receiver

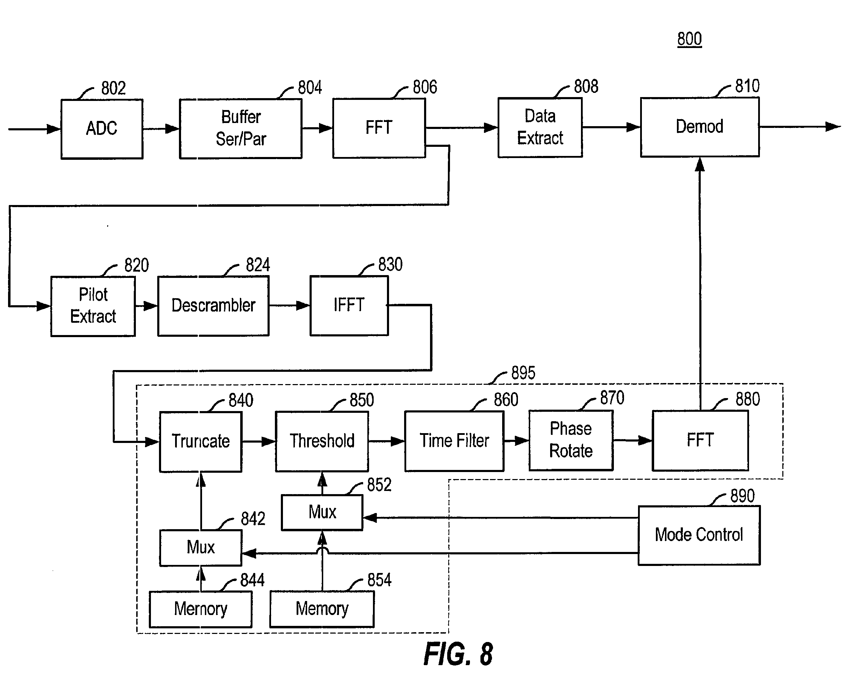

FIG. 8 is a simplified functional block diagram of an OFDM receiver 800 that can be configured to support multiple data communication modes, and can optimize channel estimate processing based on the mode. The receiver 800 does not show the RF processing front end for the sake of clarity. The receiver 800 can include an RF front end to down convert received RF signals to baseband representations, as shown in the functional block diagram of FIG. 7.

The receiver 800 can be implemented in the terminal of a mobile station, for example, in an OFDM system supporting downlink only. In another embodiment, the receiver 800 can be implemented in one or more of the access point or the terminal in an OFDMA system, where the forward link downlink signal as well as the reverse link uplink signals are transmitted using OFDM symbols.

The receiver 800 includes an Analog to Digital Converter (ADC) 802 configured to sample the received OFDM symbol and convert the samples to a digital representation. For example, the conversion rate of the ADC 802 can represent the sample rate.

The output of the ADC 802 is coupled to a buffer 804 that can also be configured to perform serial to parallel conversion. The digital samples of the received OFDM symbol generated by the ADC 802 represent a serial data stream of samples. The buffer 804 can be configured to store a predetermined number of samples for parallel processing. The predetermined number of samples can equal to or greater than the number of subbands in the OFDM system. In some embodiments, the buffer 804 can be configured to store samples for multiple symbols. For example, in an OFDM system having 4096 subbands, the buffer 804 can be configured to store 4096 or more digital samples of the received OFDM symbol for subsequent processing.

The buffer 804 is coupled to an input of an FFT module 806 configured to transform the samples stored in the buffer 804 to a frequency domain representation. In the example presented above, where the buffer 804 stores 4096 samples, the FFT module 806 can be configured to perform an 4096-point FFT on the samples to produce 4096 frequency domain samples.

As previously described, the OFDM symbol can include a number of subband sets, with one or more of the subband sets allocated to pilot and one or more distinct subband sets allocated to data. The receiver 800 can have knowledge of the subband sets allocated to the pilot. Additionally, the receiver 800 can determine or be assigned one or more data subband sets. A data extraction module 808 operates on the output of the FFT module 806 to extract the data subbands assigned to the receiver 800. The data extraction module 808 couples the extracted data subbands to a demodulator 810 that demodulates the subbands using a channel estimate to recover the data.

The demodulator 810 or some other functional block can determine the operating mode of the subband set assigned to the receiver 800 in any of a variety of ways. For example, the receiver 800 can demodulate an overhead message that specifies the mode of one or more frames of OFDM symbols, information in the OFDM symbols can include information that specifies the mode of one or more frames of subsequent OFDM symbols, or some other manner of signaling the receiver 800 of the mode can be used.

The output of the FFT module 806 is also coupled to a pilot extraction module 820. The pilot extraction module 820 can extract the pilot subband samples, for example, by tracking the subbands assigned to the pilot. As described earlier, in an OFDM system having 4096 subbands, 512 subbands can be allocated to the pilot each symbol. The pilot extraction module 820 can determine which of the subbands are assigned to the pilot and can extract those samples to a memory. For example, the pilot extraction module 820 can be configured to extract the 512 samples corresponding to pilot subbands from the 4096 samples output from the FFT module 806.

The pilot extraction module 820 couples the pilot samples to a descrambler 824. Each of the pilot signals corresponding to the pilot subbands can be scrambled according to a predetermined scrambling scheme. The scrambling scheme can be used, for example, to randomize the characteristics of the pilot signals, such that they do not repeatedly generate the same noise and interference, but instead, appear as additional low level noise sources. The pilot scrambling scheme is predetermined, and the descrambler 824 can be configured to perform the complement of the pilot scrambling scheme used at the transmitter.

The descrambled pilot samples represent an initial channel frequency response estimate. However, the channel frequency response estimate can be improved buy further processing the initial channel frequency response estimate based on the mode of the data subbands that are to be processed using the channel estimate.

The initial channel frequency response estimate is coupled from the descrambler 824 to an inverse FFT (IFFT) module 830. The IFFT module 830 can have a dimension that is smaller than the dimension of the initial FFT module 806, because the pilot subbands represent only a subset of the entire number of subbands in the OFDM system. In the example described above, there are 512 pilot subbands. Thus, the IFFT module 830 can be configured to perform a 512-point IFFT. Reducing the dimension of the IFFT module 830 can greatly reduce the number of operations performed by the IFFT module 830, and the number of subsequent operations needed to produce the final channel frequency response estimate.

The IFFT module 830 operates on the initial channel frequency response estimate to produce a channel impulse response. Each of the outputs from the IFFT module 830 represents a distinct time tap. The channel impulse response is thus characterized by a plurality of time taps that span an entire delay spread that is determined based on the duration of the sample interval used to capture the initial samples of the received OFDM symbol.

As described earlier, the channel impulse response may be accurately characterized by fewer samples than are output from the IFFT module 830. The output of the IFFT module 830 is coupled to a truncation module 840 that operates to truncate the channel impulse response to a predetermined delay spread based at least in part on a mode of the data subbands that are to be processed using the channel estimate.

The truncation module 840 truncates the channel impulse response by setting taps larger than a predetermined delay spread to zero or some substantially insignificant value. The truncation module 840 can receive a control signal that indicates the predetermined delay spread, after which the taps are truncated or set to zero. for example, the control signal can be a dimension of the channel impulse response vector, corresponding to a number of taps in the channel impulse response.

In the embodiment shown in FIG. 8, a plurality of predetermined delay spread values can be stored in truncation memory 844. Each of the delay spread values can correspond to one or more modes that the data subbands can operate. There may also be one or more default values that can be used when the receiver 800 is unsure of the mode, or is otherwise unable to determine the mode.

A first multiplexer 842 can be coupled to the truncation memory 844 and can select one of the stored delay spread values to couple to the truncation module 840 based on a control signal provided by a mode control module 890. The mode control module 890 controls the first multiplexer to select a delay spread value from the plurality of stored values based on the mode of the data subbands that are to be processed using the channel estimate.

The output of the truncation module 840 is coupled to a threshold module 850 that performs thresholding of the channel impulse response taps based on the mode of the data subbands that are to be processed using the channel estimate. The truncation module 840 can be configured to receive a mode dependent threshold value, and can be configured to set to zero or some other substantially insignificant value those taps that do not exceed a comparison threshold determined based on the mode dependent threshold value.

In one embodiment, the threshold module 850 determines an average energy value of the channel impulse response by summing the squares of all of the tap values and dividing by the number of taps. The number of taps can be the total number of taps in the channel impulse response, or can be the number of taps in the truncated impulse response. By definition, the taps beyond the truncation length do not contribute to the channel estimate. The threshold module 850 determines a comparison threshold by receiving a fractional value, termed $\alpha$ in equation (16) above, and determining the product of the fractional value and the average energy value. The threshold module compares each tap energy value with the comparison threshold and zeros or otherwise makes insignificant those taps whose energy values fall below the comparison threshold.

The threshold module 850 can receive the threshold value from a second multiplexer 852 that selects one of a plurality of threshold values stored in threshold memory 854. The threshold memory 854 can be configured to store a plurality of threshold values, each of which corresponds to one or more distinct modes. One or more threshold values can represent default threshold values. The mode control module 890 controls the second multiplexer 852 to select a threshold value based at least in part on the mode of the data subbands that are to be processed using the channel estimate.

The output of the threshold module 850 is coupled to a time filter 860 that is configured to buffer a plurality of processed channel impulse response estimates and filter the present channel impulse response estimate based of the plurality of processed channel impulse response estimates. The plurality of processed channel impulse response estimates can include processed channel impulse response estimates from past OFDM symbols as well as processed channel impulse response estimates from OFDM symbols occurring after the symbol being currently processed. Thus, the time filter 860 can be configured to perform causal filtering or non-causal filtering of the channel impulse response.

The output of the time filter 860 is coupled to a phase rotator 870 that can be configured to rotate the phases of the impulse response taps such that the resultant final channel frequency response estimate correspond to the data subbands to be processed. In the OFDM system having periodic pilot and data subbands, where the subband spacing between subband sets is fixed, the channel impulse response taps can be rotated by a known value such that the resultant frequency response is coincident with the data subbands.

The output of the phase rotator 870 is coupled to an FFT module 880 that is configured to transform the channel impulse response to a final channel frequency response estimate. The FFT module 880 can be configured to have a dimension equal to the number of pilot subbands. Thus, in the example described above, the FFT module 880 can be configured to perform a 512-point FFT. The output of the FFT module 880 represents the final channel frequency response estimate that is determined based in part on the mode. The final channel frequency response is coupled t the demodulator 810 for use in demodulating the data subbands.

The receiver 800 can also be configured to concurrently process a plurality of subband sets, each of which can be configured to operate in any one of a plurality of modes. In such an embodiment, the receiver 800 can perform concurrent mode based processing on the same initial channel impulse response to concurrently generate a plurality of final channel frequency response estimates.

The portion of the receiver 800 performing mode based channel processing 895 can be duplicated multiple times to enable the receiver 800 to concurrently generate multiple final channel frequency response estimates. The number of mode based channel processing portions 895 can be equal to the total number of possible subband sets that can be allocated to data communication. Thus, for an OFDM system having Q subband sets, one of which is allocated to pilot signals, the receiver 800 can be configured with up to Q-1 channel processing portions 895 to concurrently generate up to Q-1 channel frequency response estimates.

The receiver 800 embodiment includes a particular arrangement of modules. However, many of the modules can be replaced with similar modules or functional equivalents. Additionally, the order and positions of the modules may be modified.

The transforms are described as being performed by FFT or IFFY modules. However, an FFT implementation is not required and the transform can be performed with an FFT, Discrete Fourier Transform (DFT), Hadamard transform, and the like or some other means for transforming time samples to a frequency representation. Similarly, the IFFT can be performed by an inverse Discrete transform, an inverse Hadamard transform, and the like or any suitable means for transforming a frequency domain representation to a time domain representation. Thus, the IFFT module 830 can be any means for generating a channel impulse response. Similarly, the FFT module 880 can be any means for generating the final channel frequency response estimate.

Similarly, the pilot extraction module 820 can be performed by a filter, a sampler, a decimation module, and the like, or some other means for extracting the pilot samples. The descrambler 824 can be performed by any combination of elements or apparatus configured to perform the complement of the scrambling process implemented at the transmitter. As such, the descrambler 824 can be implemented as any suitable means for descrambling the pilot signals.

The truncation module 840 can also be implemented using a variety of different modules. For example, the truncation module 840 can include a decimation module, a sampler, a memory, a buffer, a FIFO, and the like, or any other means for truncating the channel impulse response taps.

The threshold module 850 can be implemented using a variety of different modules. For example, the truncation module 850 can include a comparator, a subtractor, an accumulator with carry out, a DAC, and the like, or some other means for thresholding the channel impulse response taps.

The time filter 860 can be a FIR, IIR, Kalmann filter, analog filter, causal filter, non-causal filter, and the like, or some other means for filtering the channel impulse response. The phase rotator 870 can include a complex multiplier, a CORDIC, and the like, or some means for rotating the samples.

Additionally, the position and order of the various mode-dependent processing can be modified and one or more mode-dependent processing modules may be omitted. For example, some of the modules are shown as functioning in the time domain, but could also be implemented in the frequency domain. Additionally, the order of some of the modules may be changed. For example, the truncation and threshold modules, 840 and 850, may be re-ordered. Some receiver 800 embodiments may not perform all of the processing shown in FIG. 8. For example, either of the truncation or thresholding modules, 840 or 850, may be omitted. The time filter 860 may be omitted. The receiver 800 may not perform multiple concurrent mode-dependent channel estimation, but may be limited to generating a single channel estimate, or may serially generate multiple channel estimates.

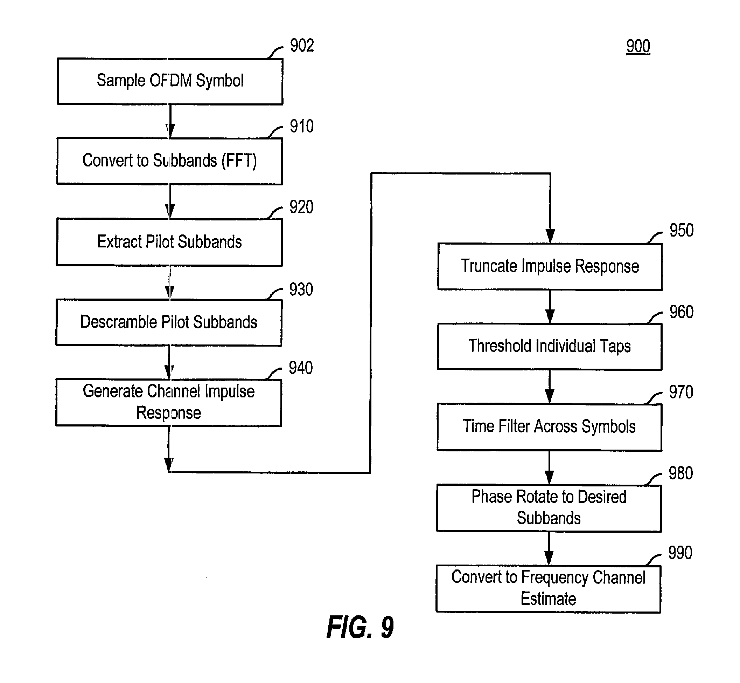

FIG. 9 is a simplified flowchart of a process 900, alternatively referred to as a method, of optimized channel estimation. The process 900 can be implemented, for example, by the receiver of FIG. 8 or the receive portions of the access point or terminal of the system shown in FIG. 7.

The process 900 begins at block 902 where the receiver samples a received OFDM symbol. The receiver proceeds to block 910 and converts the samples of the OFDM symbol to a plurality of frequency domain subbands. The receiver can be configured to perform an FFT operation on the samples to generate a frequency domain response. As described earlier, the OFDM symbol can include a plurality of pilot subbands in a set of subbands within the total number of subbands.

The receiver proceeds to block 920 and extracts the pilot subbands. In one embodiment, the receiver can be configured to extract the pilot subbands by determining which of the subbands are assigned to pilot channels and storing in memory the FFT values corresponding to those subbands. For example, in an OFDM system having Q separate subband sets, one of which is assigned to the pilot, the receiver can extract the one out of every Q FFT output values corresponding to the pilot subband and can store the value in RAM for further processing.

The receiver proceeds to block 930 to descramble each of the pilot subbands. The pilot subbands can be scrambled at the transmitter according to a predetermined algorithm, and the receiver can descramble the pilot subbands by performing the complement of the scrambling algorithm.

The descrambled frequency domain samples represent an initial channel frequency domain estimate. the receiver proceeds to block 940 and performs an IFFT operation on the initial channel frequency domain estimate to generate a channel impulse response.

The receiver can perform mode based processing on the initial channel frequency domain estimate or the channel impulse response, although time domain processing may be simpler to implement. The receiver can use the same channel impulse response to generate multiple mode-dependent final channel frequency response estimates, where the receiver concurrently supports multiple modes in the same OFDM symbol.

The receiver proceeds to block 950 and performs mode-dependent truncation of the channel impulse response. The receiver can truncate the channel impulse response to a length that is shorter than the length defined by the number of pilot subbands. The receiver can store a impulse response length, corresponding to a delay spread, in memory for each of the modes and can retrieve the impulse response length corresponding to the assigned or transmitted mode. At least two modes can have distinct impulse response lengths, such that the impulse response length varies depending on the mode.

The receiver truncates the impulse response by setting to zero those taps that are greater than the impulse response length. That is, those taps that represent the longest delays are truncated from the channel impulse response.

The receiver proceeds to block 960 and performs mode-dependent thresholding on the truncated channel impulse response. The receiver can store one or more threshold values in memory, where each threshold value corresponds to one or more modes. The receiver retrieves the associated threshold value and determines or otherwise generates a comparison threshold based at least in part on the threshold value.

The receiver compares each of the tap values from the truncated channel impulse response to the comparison threshold. If the tap value or a value generated by the tap value is equal to or greater than the comparison threshold the receiver performs no modification of that tap value. If the tap value or value generated by the tap value is less than the comparison threshold, the receiver sets that tap value to zero or some insignificant value. A value is an insignificant value if it has substantially no contribution to the channel impulse response or the corresponding channel frequency response estimate.

In one embodiment, the mode-dependent threshold value is a relative value. For example, the receiver can be configured to determine an average energy value of the truncated channel impulse response. The mode-dependent threshold value can be a fraction. The receiver can scale the average energy value with the mode-dependent threshold value to generate the comparison threshold. The receiver sets to zero the taps having a tap energy value less than the comparison threshold.

The receiver then proceeds to block 970 and performs time filtering of the channel impulse response that has been truncated and subjected to thresholding. The time filter can use channel impulse response values that span multiple symbols.

After time filtering, the receiver has generated a mode-dependent channel impulse response. The receiver can generate a final channel frequency response estimate at the subbands corresponding to the data subbands. The receiver proceeds to block 980 and phase rotates the tap values. The receiver phase rotates the tap values because the channel impulse response was generated from samples of the pilot subbands. The pilot subbands within an OFDM symbol are distinct from the data subbands, but are typically offset by a known and fixed frequency, such as a fixed number of subbands. Thus, by phase rotating the channel impulse response tap values, the receiver can produce a channel frequency response estimate that coincides with the data subbands. The receiver proceeds to block 990 and generates a final channel frequency response estimate by performing an FFT on the truncated, thresholded, time filtered, and phase rotated channel impulse response.

The channel estimation techniques described herein may be implemented by various means. For example, these techniques may be implemented in hardware, software, or a combination thereof. For a hardware implementation, the processing units used for channel estimation may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

For a software implementation, the channel estimation techniques may be implemented with modules (e.g., procedures, functions, and so on) that perform the functions described herein. The software codes may be stored in a memory unit (e.g., memory units 732 and 772 in FIG. 7) and executed by a processor (e.g., processors 730 and 770). The memory unit may be implemented within the processor or external to the processor, in which case it can be communicatively coupled to the processor via various means as is known in the art.

The various steps or acts in a method or process may be performed in the order shown, or may be performed in another order. Additionally, one or more process or method steps may be omitted or one or more process or method steps may be added to the methods and processes. An additional step, block, or action may be added in the beginning, end, or intervening existing elements of the methods and processes.

A coupling or connection need not be a direct connection. The various modules can be coupled to one another through a direct connection, direct coupling, or through an indirect coupling where one or more intervening elements may be used to couple the respective modules.

Headings are included herein for reference and to aid in locating certain sections. These headings are not intended to limit the scope of the concepts described therein under, and these concepts may have applicability in other sections throughout the entire specification.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

## Claims

1. A method of estimating at least one frequency response for a multiple-access wireless channel in a orthogonal frequency division multiplexing communication system supporting multiple modes of communication, comprising:

   obtaining (512) an initial frequency response estimate for a first set of P uniformly spaced subbands based on channel gain estimates for a second set of non-uniformly spaced subbands, where P is an integer greater than one and is a power of two, and wherein the first set includes at least one subband not included in the second set;
   deriving (514) a time-domain channel impulse response estimate for the wireless channel based on the initial frequency response estimate; and
   deriving (518) a final frequency response estimate for each mode within each symbol of the wireless channel based on the time-domain channel impulse response estimate.

2. The method of claim 1, wherein the mode comprises a modulation type.

3. The method of claim 1, wherein the mode comprises a code rate.

4. The method of claim 1, wherein the mode comprises a modulation layer.

5. The method of claim 2, wherein the final frequency response estimate comprises a base frequency response estimate and an enhancement frequency response estimate for a layered modulation scheme.

## Patentansprüche

1. Ein Verfahren zum Abschätzen von zumindest einer Frequenzantwort für einen Mehrfachzugriff drahtlosen Kanal in einem orthogonalen frequenzgeteilten Multiplex-Kommunikationssystem, welches mehrere Betriebsarten der Kommunikation unterstützt, aufweisend:

   Erlangen (512) einer anfänglichen Frequenzantwortabschätzung für einen ersten Satz von P gleichförmig beabstandeter Teilbänder basierend auf der Kanalverstärkungsabschätzung für einen zweiten Satz von nicht gleichförmig beabstandeter Teilbänder, wobei P eine ganze Zahl größer als eins und eine Zweierpotenz ist und wobei der erste Satz zumindest ein Teilband beinhaltet, das nicht in dem zweiten Satz beinhaltet ist;
   Ableiten (514) einer Zeitbereich-Kanalimpulsantwortabschätzung für den drahtlosen Kanal basierend auf der anfänglichen Frequenzantwortabschätzung; und
   Ableiten (518) einer letzten Frequenzantwortabschätzung für jede Betriebsart innerhalb jedes Symbols des drahtlosen Kanals basierend auf der Zeitbereich-Kanalimpulsantwortabschätzung.

2. Das Verfahren gemäß Anspruch 1, wobei die Betriebsart eine Modulationsart aufweist.

3. Das Verfahren gemäß Anspruch 1, wobei die Betriebsart eine Kodierungsrate aufweist.

4. Das Verfahren gemäß Anspruch 1, wobei die Betriebsart eine Modulationsschicht aufweist.

**5.** Das Verfahren gemäß Anspruch 2, wobei die letzte Frequenzantwortabschätzung eine Grundfrequenzantwortabschätzung und eine Oberfrequenzantwortabschätzung für ein geschichtetes Modulationsschema aufweist.

## Revendications

**1.** Un procédé pour estimer au moins une réponse en fréquence pour un canal sans fil à accès multiple dans un système de communication à multiplexage par division de fréquence orthogonale supportant des modes multiples de communication, comprenant :

obtenir (512) une estimée de réponse en fréquence initiale pour un premier jeu de P sous-bandes uniformément espacées sur la base d'estimées de gain de canal pour un second jeu de sous-bandes non uniformément espacées, P étant un entier supérieur à l'unité et étant une puissance de 2, et le premier jeu comprenant au moins une sous-bande non incluse dans le second jeu ;
dériver (514) une estimée de réponse impulsionnelle de canal dans le domaine temporel pour le canal sans fil sur la base de l'estimée de réponse en fréquence initiale ; et
dériver (518) une estimée de réponse en fréquence finale pour chaque mode dans chaque symbole du canal sans fil sur la base de l'estimée de réponse impulsionnelle de canal dans le domaine temporel.

**2.** Le procédé de la revendication 1, dans lequel le mode comprend un type de modulation.

**3.** Le procédé de la revendication 1, dans lequel le mode comprend un débit de code.

**4.** Le procédé de la revendication 1, dans lequel le mode comprend une couche de modulation.

**5.** Le procédé de la revendication 2, dans lequel l'estimée de réponse en fréquence finale comprend une estimée de réponse de fréquence de base et une estimée de réponse de fréquence de renforcement pour un schéma de modulation en couches.

OFDM Subband Structure

FIG. 1

FIG. 2

EP 1 861 972 B1

N Total Subbands

N/P =Q Subbands    N/P Subbands    N/P Subbands    N/P Subbands

1    $s_1$    $s_2$    $s_3$    $s_4$    $s_{P-1}$    $s_P$    N

FIG. 3

N Total Subbands

M Usable Subbands

N/P Subbands    N/P Subbands

1    $s_1$    $s_b$    $s_{b+1}$    $s_{b+2}$    $s_e$    $s_P$    N

FIG. 4

EP 1 861 972 B1

Start

_500_

_512_

Obtain an initial frequency response estimate for a first set of P uniformly spaced subbands based on, e.g., pilot symbols received on a second set of subbands used for pilot transmission

_514_

Derive a channel impulse response estimate based on the initial frequency response estimate

_516_

Filter channel impulse response estimates obtained for multiple OFDM symbols

_518_

Derive a final frequency response estimate for each mode based on the corresponding channel impulse response estimate

End

*FIG. 5*

Start

*610*

Obtain received pilot symbols for subbands with pilot transmission

*612*

Derive channel gain estimates for subbands with pilot transmission based on the received pilot symbols

*614*

Perform extrapolation and/or interpolation as necessary to obtain channel gain estimates for subbands without pilot transmission

*616*

Form initial frequency response estimate $\hat{\underline{H}}_{Px1}^{init}$ for P uniformly spaced subbands based on the channel gain estimates

*618*

Perform P-point IFFT on the frequency response estimate $\hat{\underline{H}}_{Px1}^{init}$ to obtain channel impulse response estimate $\hat{\underline{h}}_{Px1}^{ls}$

*620*

Perform time-domain filtering on channel impulse response estimates $\hat{\underline{h}}_{Px1}^{ls}$ obtained for multiple OFDM symbols

*622*

Perform tap selection on the channel impulse response estimate $\hat{\underline{h}}_{Px1}^{ls}$ to select "good" taps and discard other taps

*624*

For each OFDM symbol mode, perform zero padding to obtain a corresponding vector $\hat{\underline{h}}_{Nx1}^{ls}$ of length N

*626*

For each OFDM symbol mode, perform N-point FFT on the corresponding vector $\hat{\underline{h}}_{Nx1}^{ls}$ to obtain corresponding channel frequency response estimate $\hat{\underline{H}}_{Nx1}^{ls}$ for N subbands

End

*600*

**FIG. 6**

**FIG. 7**

EP 1 861 972 B1

**FIG. 8**

EP 1 861 972 B1

*FIG. 9*

EP 1 861 972 B1

**EP 1 861 972 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUPING ZHAO et al.** A novel channel estimation method for OFDM mobile communication systems based on pilot signals and transform-domain processing. *VEHICULAR TECHNOLOGY CONFERENCE,* 1997, 2089-2093